# EUROPÄISCHE PATENTSCHRIFT

(11) **EP 1 603 302 B1**
(45) Veröffentlichungstag und Bekanntmachung des Hinweises auf die Patenterteilung: **20.12.2006**
(21) Anmeldenummer: 05019104.8
(22) Anmeldetag: 07.05.1998
(51) Int. Cl.: H04L 29/06, G06F 17/30

(54) **Verfahren und Vorrichtung zur Codierung, Übertragung und Decodierung digitaler Daten**
Method and apparatus for encoding, transmitting and decoding digital data
Procédé et dispositif pour encodage, transmission et décodage de données numériques

(30) Priorität: 07.05.1997 DE 19719468
(43) Veröffentlichungstag der Anmeldung: 07.12.2005
(62) Teilanmeldung aus: 98933474.3
(73) Patentinhaber: SIEMENS AKTIENGESELLSCHAFT, 80333 München (DE); Infineon Technologies AG, 81669 München (DE)
(72) Erfinder: Wimmer, Bernhard, 80798 München (DE); Stockhammer, Thomas, 83346 Bergen (DE)
(74) Vertreter: Reinhard - Skuhra - Weise & Partner

(56) Entgegenhaltungen:
- EP-A- 0 651 584
- EP-A- 0 666 652
- EP-A- 0 690 630
- EP-A- 0 739 139
- US-A- 5 361 261

## Beschreibung

Die Erfindung betrifft die Codierung, Übertragung und Decodierung digitaler Daten, die in Datensegmente variabler Länge gruppiert werden.

Eine allgemeine Einführung zu Computernetzwerken und Codierverfahren liefert "Computer Networks", A. Tanenbaum, 1996, Prentice Hall International, Upper Saddle River, New Jersey, US.

Die EP 0690630 A2 beschreibt ein digitales serielles Dateninterface für Video- und Audiodaten. Daten werden dabei in einem bestimmten digitalen Signalformat über einen Kommunikationsübertragungskanal übertragen. Die Daten werden zur Datenübertragung in Datensegmente gruppiert. Die Datensegmente umfassen eine Kontrollinformation und ein Nutzdatenfeld. Dabei wird eine Längenangabe des Datensegments bei der Kodierung für die Kontrollinformation des Datensegments eingetragen. Ferner wird jedem Datensegment eine Synchronisationsinformation zugewiesen.

Die US 5,361,261 beschreibt ein Übertragungsnetzwerk für paketorientierte Daten und isochrone Daten. Die Daten werden demgemäß in Rahmen organisiert, die Rahmensynchronisationssymbole und Längenangaben aufweisen.

Bei der Übertragung digitaler Daten werden bei sogenannten paketorientierter Datenübertragung die Daten in Datensegmente gruppiert, die eine fest vorgegebene oder eine variable Segmentlänge aufweisen. Die Datensegmente werden kanalcodiert und übertragen.

Digitale Daten sind beispielsweise digitale Videodaten, digitale Audiodaten oder auch digitale Textinformation, z.B. in ASCII-Format.

Werden variable Segmentlängen für die Datensegmente zugelassen, so besteht für die Empfangsstation das Problem, sich auf den empfangenen sequentiellen Bitstrom korrekt hinsichtlich der Datensegmente aufzusynchronisieren, d.h. jeweils den Anfang eines Datensegments korrekt aufzufinden. Diese Aufgabe wird üblicherweise von einem Multiplexer gelöst.

In (ITU-H.223, Internationale Telecommunications Union, Multiplex Protocol for low bitrate multimedia communication, 1996) ist das Multiplexer-Protocoll ITU-H.223 des Bildtelephoniestandards ITU-H.324 beschrieben. In dem Multiplex-Protokoll ITU-H.223 werden variable Segmentlängen verwendet. Die einzelnen Datensegmente werden durch ein sogenanntes Synchronisationswort (HDLC-Flags, High Level Data Control-Flags) voneinander getrennt. Das HDLC-Flag besteht aus der Bitfolge "0111 1110". Um eine fehlerhafte Klassifikation (Emulation) von einer in dem Datensegment vorkommenden gleichen Bitfolge als Synchronisationswort zu verhindern, wird bei der Codierung jedes Datensegment nach der Bitfolge "11111" (fünf aufeinanderfolgende Bits mit dem Wert "1") untersucht. Wird eine solche Bitfolge gefunden, so wird automatisch ein Bit mit dem Wert "0" eingefügt. Diese Vorgehensweise wird als Bitstopfen (Bitstuffing) bezeichnet.

Dieses Verfahren zeigt bei einem fehlerhaften Übertragungskanal, z.B. bei der Funkübertragung gemäß dem GSM-Verfahren oder dem DECT-Verfahren, schlechte Eigenschaften. Durch den fehlerhaften Übertragungskanal wird oftmals das Synchronisationswort nicht gefunden, falls in dem Synchronisationswort bei der Übertragung ein Fehler auftritt. Auch kann ein Übertragungsfehler im Datensegment dazu führen, dass das Synchronisationswort emuliert wird, was zu einer falschen Synchronisation beim Empfänger des übertragenen Datensegments führt.

Somit liegt der Erfindung das Problem zugrunde, Verfahren und Vorrichtungen anzugeben, mit denen eine sichere Synchronisation auf die Datensegmente erreicht wird.

Das Problem wird durch ein Verfahren gemäß der Patentansprüche 1, 2 sowie durch Vorrichtungen gemäß der Patentansprüche 15, 16 gelöst.

Erfindungsgemäß werden empfangene Datensegmente, welche Kontrollinformation mit einer Längenangabe des jeweiligen Datensegments und Synchronisationsinformation enthalten, abhängig von der Längenangabe und der Synchronisationsinformation des jeweiligen Datensegments decodiert. Die Synchronisationsinformation wird zum Finden eines Anfangs des Datensegments mittels einer Korrelationsschwelle ermittelt, wobei die Korrelationsschwelle eine Anzahl von Bits angibt, mit der ein Datenwort identisch sein muss, um als Synchronisationsinformation klassifiziert zu werden.

Die Vorrichtung zur Dekodierung digitaler Daten weist eine Prozessoreinheit auf, die derart eingerichtet ist, dass die Verfahrensschritte der Verfahren zur Decodierung durchgeführt werden.

Die Vorrichtungen können Universalrechner sein mit einem programmierbaren Mikroprozessor, der Prozessoreinheit. Die Codierung bzw. Decodierung der digitalisierten Bilder erfolgt in diesem Fall unter Verwendung eines Computerprogramms, das derart programmiert ist, dass die entsprechenden Verfahrensschritte von dem Rechner durchgeführt werden.

Die Vorrichtungen können auch spezielle Hardware-Bausteine, z.B. eine spezielle Computerkarte zur Codierung bzw. Decodierung sein.

Anschaulich kann die Erfindung darin gesehen werden, dass eine Längenangabe des jeweiligen Datensegments in der Kontrollinformation des Datensegments enthalten ist, wodurch eine sichere Synchronisation und damit verbesserte Fehlerrobustheit erreicht wird.

Vorteilhafte Weiterbildungen der Erfindung ergeben sich aus den abhängigen Ansprüchen.

Die Fehlerrobustheit wird in einer Weiterbildung dadurch weiter verbessert, dass zusätzlich zu der Angabe der Segmentlänge auch ein Synchronisationswort verwendet wird und gegebenenfalls auch die Technik des Bitstopfens.

Ferner ist es in einer Weiterbildung zur weiteren Erhöhung der Fehlerrobustheit vorteilhaft, die Angabe der Segmentlänge und/oder eine Angabe über die Art der in dem Datensegment enthaltenen Daten mit Fehlererkennungsinformation und/oder Fehlerkorrekturinformation zu sichern.

In den Figuren ist ein bevorzugtes Ausführungsbeispiel der Erfindung dargestellt, welches im weiteren näher erläutert wird.

Es zeigen:
- Fig. 1: eine Skizze des Aufbaus eines Datensegments mit Kontrollinformation und Nutzdateninformation;
- Fig. 2: eine Skizze einer Rechneranordnung mit zwei Rechnern, und einem Übertragungsmedium zur Codierung, Übertragung und Decodierung digitaler Daten;

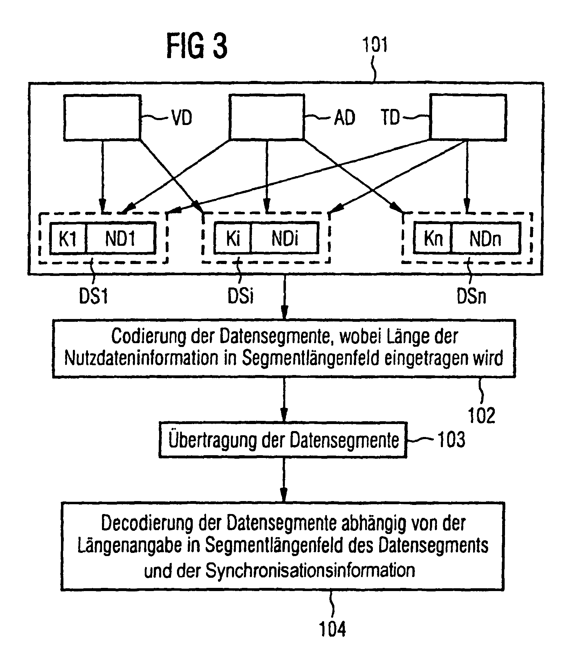

- Fig. 3: ein Ablaufdiagramm, in dem die Verfahrensschritte des Verfahrens dargestellt sind.

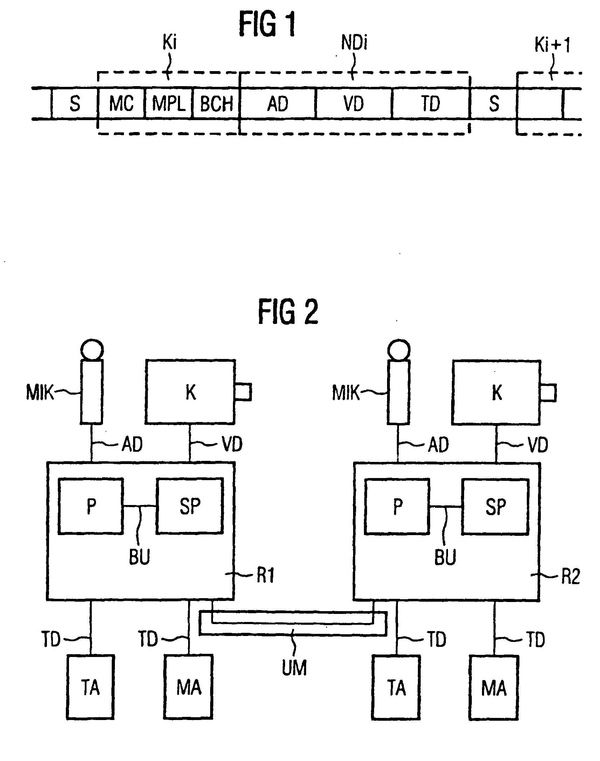

Figur 2 zeigt eine Kamera K, mit der eine Folge von Bildern B aufgenommen wird und als digitale Videodaten VD einem ersten Rechner R1 über eine Verbindung V zugeführt und gespeichert wird. Über ein Mikrophon MIK wird ein Sprachsignal SS aufgenommen und als digitalisierte Audiodaten AD dem ersten Rechner R1 zugeführt und gespeichert. Eingabe von Textinformation TD erfolgt über eine Tastatur TA und/oder eine Maus MA. Der erste Rechner R1 weist ferner einen Bildschirm BS zur Darstellung beliebiger Information auf.

Der erste Rechner R1 ist über ein Übertragungsmedium UM, z.B. einem Kabel oder einer Funkübertragungsstrecke, mit einem zweiten Rechner R2 verbunden. Über das Übertragungsmedium UM werden die von dem ersten Rechner R1 codierten digitalen Daten an den zweiten Rechner R2 übertragen und dort decodiert.

Der erste Rechner R1 und der zweite Rechner R2 weisen jeweils einen Speicher SP und eine Prozessoreinheit P auf, die über einen Bus BU miteinander verbunden sind. Die Prozessoreinheit P des ersten Rechners R1 ist derart ausgestaltet, dass die im weiteren erläuterten Verfahrensschritte zur Codierung der digitalen Daten durchgeführt werden. Die Prozessoreinheit P des zweiten Rechners R2 ist derart ausgestaltet, dass die empfangenen codierten Daten decodiert werden entsprechend dem im weiteren beschriebenen Verfahren. Der zweite Rechner R2 weist ebenfalls einen Bildschirm BS zur Darstellung beliebiger Informationen sowie eine Tastatur TA und/oder eine Maus MA, eine Kamera K und ein Mikrophon MIK auf.

Die digitalen Daten, Videodaten VD, Audiodaten AD und/oder Textdaten TD werden in dem ersten Rechner R1 in mindestens ein Datensegment Dsi (i = 1 .. n) gruppiert (Schritt 101) (vgl. Figur 1).

Das Datensegment DSi enthält Kontrollinformation Ki und Nutzdateninformation NDi, die eigentlich zu übertragenden digitalen Daten.

Der Aufbau des Datensegments DSi ist in Figur 1 dargestellt.

Das Datensegment DSi weist ein Synchronisationswort S (HDLC-Flag), bestehend aus der Bitfolge "0111 1110", auf.

Die Kontrollinformation Ki enthält zur Übertragung erforderliche Information. In einem Multiplex-Code-Feld MC der Länge 4 Bit wird angegeben, welche Art von Daten in welcher Reihenfolge in der Nutzdateninformation NDi enthalten sind.

Mit einem Segmentlängenfeld MPL wird die Länge der Nutzdateninformation NDi und damit implizit die Länge des Datensegments DSi angegeben, da die Kontrollinformation Ki und das Synchronisationswort S eine feste vorgebbare Länge aufweisen.

Das Segmentlängenfeld MPL weist eine Länge von 7 Bit auf, womit eine maximale Länge der Nutzdateninformation NDi von 126 Bytes beschrieben werden kann. Der Wert 127 ist reserviert für den Fall, dass die Nutzdateninformation NDi länger ist als 126 Bytes.

Ein BCH-Feld BCH enthält Fehlererkennungsinformation und/oder Fehlerkorrekturinformation für die in der Kontrollinformation Ki enthaltenen Daten. Das BCH-Feld BCH weist eine Länge von 4 Bit auf. Das BCH-Feld BCH enthält den über die Kontrollinformation Ki gebildeten BCH-Code (15,11) mit einer freien Distanz von 3. Mit dem BCH-Code (15,11) kann ein Fehler korrigiert und weitere Fehler erkannt werden.

Die Nutzdateninformation NDi enthält Videodaten VD, Audiodaten AD und/oder Textdaten TD.

Das Datensegment DSi bzw. die Datensegmente DSi werden codiert, wobei in das Segmentlängenfeld MPL die Länge der Nutzdateninformation NDi von dem ersten Rechner R1 eingetragen wird (Schritt 102).

Das codierte Datensegment DSi bzw. die codierten Datensegmente DSi wird bzw. werden von dem ersten Rechner R1 zu dem zweiten Rechner R2 übertragen (Schritt 103).

Die in dem zweiten Rechner R2 empfangenen Datensegmente DSi werden abhängig von der Längenangabe in dem Segmentlängenfeld MPL des Datensegments DSi und/oder abhängig von der Längenangabe in dem Segmentlängenfeld MPL eines anderen Datensegments DSj, j ≠ i decodiert (Schritt 104).

Dies erfolgt dadurch dass bei einem empfangenen Bitstrom zunächst das Synchronisationswort S ermittelt wird, um in dem Bitstrom den Anfang eines Datensegments DS1 zu finden.

Zur Erhöhung des Fehlerrobustheit des Synchronisationsworts S wird eine Korrelationsschwelle verwendet, mit der eine Anzahl Bits angegeben wird, die ein Datenwort identisch mit dem Synchronisationswort S haben muss, um als Synchronisationswort S klassifiziert zu werden. Wird die Korrelationsschwelle zu hoch gewählt, so wird die Anzahl nicht erkannter Synchronisationsworte S steigen, da Übertragungsfehler das Synchronisationswort S verfälschen.

Bei einer zu niedrig gewählten Korrelationsschwelle werden mehr Synchronisationsworte S erkannt, jedoch nimmt auch die Zahl falsch klassifizierter Synchronisationsworte S zu.

Bei einer Länge des Synchronisationswortes S von 32 Bit hat sich eine Korrelationsschwelle von 27 Bit als ausreichend herausgestellt.

Wurde das Synchronisationswort S korrekt ermittelt und wurde auch die Kontrollinformation Ki korrekt decodiert, so wird unter Verwendung des Segmentlängenfeldes MPL die Position des Synchronisationswort S des folgenden Datensegments Dsi+1 ermittelt.

Damit besteht ein A priori-Wissen, womit es möglich wird, die Korrelationsschwelle für die ermittelte Position zu verringern, um die Fehlerrobustheit zu erhöhen. Es hat sich in diesem Fall eine Korrelationsschwelle von 23 Bit als ausreichend herausgestellt.

Um eine fehlerhafte Decodierung zu verhindern ist es ferner vorgesehen, auch in der Nutzdateninformation NDi nach dem Synchronisationswort S zu suchen, wobei die Korrelationsschwelle allerdings hoch gewählt wird, um die Detektions falscher Synchronisationsworte S zu vermeiden. Es hat sich in diesem Fall eine Korrelationsschwelle von 30 Bit als ausreichend herausgestellt.

Weiterhin wird ist es vorgesehen, bei der Decodierung A priori-Wissen vorangegangener Datensegmente DSi-1 zu verwenden, um die Position des Synchronisationsworts S des Datensegments DSi und somit auch die Position der Kontrollinformation Ki in dem Datensegment DSi zu ermitteln. Ist die Decodierung der Kontrollinformation Ki in dem Datensegment DSi nunmehr fehlerfrei, so kann unabhängig von dem Korrelationsergebnis geschlossen werden, dass das Datensegment DSi korrekt erkannt wurde.

Wird die Kontrollinformation Ki in dem Datensegment DSi nicht korrekt decodiert, so kann das Segmentlängenfeld MPL nicht verwendet werden. Es wird in diesem Fall das Synchronisationswort S des folgenden Datensegments DSi+1 ermittelt. Damit ist bekannt, wie viele Bits zwischen den aufeinanderfolgenden Synchronisationsworten S sind. Aus dieser Information wird die Länge der Nutzdateninformation NDi und somit der Wert des Segmentlängenfeldes MPL berechnet (Kontrollinformation Ki und Synchronisationswort S haben feste Längen). Damit ist es möglich, das Segmentlängenfeld MPL auf Grund der Berechnung zu korrigieren. Damit steigt die Wahrscheinlichkeit einer korrekten Decodierung der Kontrollinformation Ki.

Im weiteren werden einige Alternativen zu dem oben beschriebenen Ausführungsbeispiel aufgezeigt.

Die Anzahl der Bits in den obengenannten Feldern in der Kontrollinformation Ki sind frei vorgebbar und nicht wesentlich für die Erfindung.

Die Verwendung des Synchronisationswortes erhöht die Fehlerrobustheit bei der Datenübertragung. Je länger das Synchronisationswort gewählt wird, desto größer ist die Fehlerrobustheit, die erreichbar ist.

Die in dem BCH-Feld BCH enthaltene Fehlererkennungsinformation und/oder Fehlerkorrekturinformation kann auf beliebige Weise unter Verwendung eines Codes zur Fehlererkennung und/oder Fehlerkorrektur gebildet werden. Die Verwendung des BCH-Feldes BCH ist im Rahmen der Erfindung optional.

Unter einem Rechner ist in diesem Zusammenhang eine Vorrichtung mit einer Prozessoreinheit zu verstehen, mit der die oben beschriebenen Verfahrensschritte durchgeführt werden können, z.B. auch ein Bildtelephon mit integriertem Mikroprozessor.

Anschaulich kann die Erfindung darin gesehen werden, dass eine Längenangabe des jeweiligen Datensegments in der Kontrollinformation des Datensegments enthalten ist, wodurch eine sichere Synchronisation und damit verbesserte Fehlerrobustheit erreicht wird.

## Patentansprüche

1. Verfahren zur Decodierung mindestens eines empfangenen Datensegments (DSi), welches Kontrollinformation (Ki) mit einer Längenangabe (MPL) des Datensegments (DSi) und Synchronisationsinformation (S) enthält, wobei das Datensegment (DSi) abhängig von der Längenangabe (MPL) des Datensegments (DSi) und der Synchronisationsinformation (S) des Datensegments (DSi) decodiert wird,
**dadurch gekennzeichnet,**
**dass** die Synchronisationsinformation (S) zum Finden eines Anfangs des Datensegments (DSi) mittels einer Korrelationsschwelle ermittelt wird und die Korrelationsschwelle eine Anzahl von Bits angibt, mit der ein Datenwort identisch sein muss, um als Synchronisationsinformation (S) klassifiziert zu werden.

2. Verfahren zur Codierung, Übertragung und Decodierung digitaler Daten mit den folgenden Schritten:
a) Gruppieren (S101) von digitalen Daten in mindestens ein Datensegment (DSi),
b) Codieren (S102) der Datensegmente (DSi), wobei jeweils eine Längenangabe (MPL) des Datensegmentes (DSi) bei der Codierung in eine Kontrollinformation (Ki) des Datensegmentes (DSi) eingetragen wird und dem Datensegment (DSi) eine Synchronisationsinformation (S) bei der Codierung zugewiesen wird,
c) Übertragen (S103) der Datensegmente (DSi),
d) Empfangen der Datensegmente (DSi),
e) Decodieren (S104) der Datensegmente (DSi), wobei ein jeweiliges empfangenes Datensegment (DSi) abhängig von der Längenangabe und von der Synchronisationsinformation (S) des Datensegmentes (DSi) decodiert wird,
**dadurch gekennzeichnet,**
**dass** zum Ermitteln der Synchronisationsinformation (S) eines jeweiligen empfangenen Datensegmentes (Di) eine Korrelationsschwelle verwendet wird, um einen Anfang des Datensegmentes (DSi) zu finden, wobei die Korrelationsschwelle eine Anzahl von Bits angibt, mit der ein Datenwort identisch sein muss, um als Synchronisationsinformation (S) klassifiziert zu werden.

3. Verfahren nach Anspruch 1 oder 2,
wobei die Kontrollinformation (Ki) mindestens die Synchronisationsinformation (S) in Form einer innerhalb des Datensegments (DSi) eindeutigen Bitfolge enthält.

4. Verfahren nach einem der Ansprüche 1 bis 3,
wobei die Kontrollinformation (Ki) eine Angabe (MC) darüber enthält, welche Arten digitaler Daten in dem Datensegment (DSi) enthalten sind.

5. Verfahren nach Anspruch 4,
wobei die Angabe (MC) über die Art enthaltener Daten eine Länge von 4 Bit aufweist.

6. Verfahren nach einem der Ansprüche 1 bis 5,
wobei die Längenangabe (MPL) eine Länge von 7 Bit aufweist.

7. Verfahren nach einem der Ansprüche 1 bis 6,
wobei die Längenangabe (MPL) und/oder eine Angabe (MC) über die Art in dem Datensegment (DSi) enthaltener Daten mit Fehlererkennungsinformation und/oder Fehlerkorrekturinformation (BCH) gesichert wird/werden.

8. Verfahren nach einem der Ansprüche 1 bis 7,
wobei die Synchronisationsinformation (S) 32 Bit und die Korrelationsschwelle 27 Bit aufweist.

9. Verfahren nach einem der Ansprüche 1 bis 8,
wobei eine Position der Synchronisationsinformation (S) eines jeweiligen folgenden Datensegments (DSi+1) unter Verwendung der Längenangabe (MPL) des empfangenen Datensegments (DSi) ermittelt wird und die Korrelationsschwelle für die ermittelte Position verringert wird, falls eine Kontrollinformation (Ki) korrekt decodiert wurde, und die jeweilige Synchronisationsinformation (S) korrekt ermittelt wurde.

10. Verfahren nach Anspruch 8 und 9,
wobei die Korrelationsschwelle auf 23 Bit verringert wird.

11. Verfahren nach Anspruch 9 oder 10,
wobei ein jeweiliges Datensegment(DSi) ferner Nutzdateninformation (NDi) als zu übertragende digitale Daten aufweist, und die Korrelationsschwelle höher als an der ermittelten Position der Synchronisationsinformation (S) des jeweiligen folgenden Datensegments (DSi+1) gewählt wird, um eine Synchronisationsinformation (S) in der Nutzdateninformation (NDi) zu suchen.

12. Verfahren nach Anspruch 11,
wobei zum Finden der Synchronisationsinformation (S) in der Nutzdateninformation (NDi) eine Korrelationsschwelle von 30 Bit gewählt wird.

13. Verfahren nach einem der Ansprüche 1 bis 12,
wobei die Kontrollinformation (Ki) und die Synchronisationsinformation (S) feste Längen haben.

14. Verfahren nach Anspruch 13,
wobei, falls die Kontrollinformation (Ki) in dem jeweiligen Datensegment (DSi) nicht korrekt decodiert wird, die Synchronisationsinformation (S) des folgenden Datensegmentes (DSi+1) ermittelt wird, aus der Anzahl von Bits zwischen den ermittelten aufeinanderfolgenden Synchronisationsinformationen (S) die Länge der jeweiligen Nutzdateninformation (NDi) berechnet wird, und die Längenangabe (MPL) des Datensegmentes (DSi) aufgrund der Berechnung korrigiert wird.

15. Vorrichtung zur Decodierung mindestens eines empfangenen Datensegments (DSi), welches Kontrollinformation (Ki) mit einer Längenangabe (MPL) des Datensegments (DSi) und Synchronisationsinformation (S) enthält, mit einer Empfängereinheit zum Empfangen des Datensegments (DSi) und einer Prozessoreinheit (P), welche das empfangene Datensegment (DSi) abhängig von der Längenangabe (MPL) des Datensegments (DSi) und der Synchronisationsinformation (S) des Datensegments (DSi) decodiert,
**dadurch gekennzeichnet,**
**dass** die Prozessoreinheit (P), derart eingerichtet ist, dass eine Synchronisationsinformation (S) des empfangenen Datensegments (Dsi) mittels einer Korrelationsschwelle zum Finden eines Anfangs des Datensegments (Dsi) ermittelt wird, wobei die Korrelationsschwelle eine Anzahl von Bits angibt, mit der ein Datenwort identisch sein muss, um als Synchronisationsinformation (S) klassifiziert zu werden.

16. Anordnung zur Codierung, Übertragung und Decodierung digitaler Daten, mit:
a) einer ersten Vorrichtung (R1), die eine erste Prozessoreinheit (P) aufweist, die derart eingerichtet ist, dass die digitalen Daten in mindestens ein Datensegment (DSi) gruppiert werden, wobei das Datensegment (DSi) codiert wird, und bei der Codierung eine Längenangabe (MPL) des Datensegments (DSi) in Kontrollinformation (Ki) des Datensegments (DSi) eingetragen wird und dem Datensegment (DSi) eine Synchronisationsinformation (S) zugewiesen wird;
b) einem Mittel (UM) zum Übertragen des Datensegments (DSi), und mit
c) einer zweiten Vorrichtung (R2), die eine Empfängereinheit zum Empfangen des Datensegments (DSi) sowie eine zweite Prozessoreinheit (P) aufweist, die das empfangene Datensegment abhängig von der Längenangabe (MPL) des Datensegments (DSi) und der Synchronisationsinformation (S) des Datensegments (DSi) decodiert,
**dadurch gekennzeichnet,**
**dass** die zweite Prozessoreinheit (P) derart eingerichtet ist, dass eine Synchronisationsinformation (S) des empfangenen Datensegmentes (DSi) mittels einer Korrelationsschwelle zum Finden eines Anfangs des Datensegmentes (Dsi) ermittelt wird, wobei die Korrelationsschwelle eine Anzahl von Bits angibt, mit der ein Datenwort identisch sein muss, um als Synchronisationsinformation (S) klassifiziert zu werden.

17. Vorrichtung oder Anordnung nach einem der Ansprüche 15 oder 16,
wobei die Prozessoreinheit (P) derart eingerichtet ist, dass die Kontrollinformation (Ki) mindestens die Synchronisationsinformation (S) in Form einer innerhalb des Datensegments (DSi) eindeutigen Bitfolge enthält.

18. Vorrichtung oder Anordnung nach einem der Ansprüche 15 bis 17,
wobei die Prozessoreinheit (P) derart eingerichtet ist, dass die Kontrollinformation (Ki) eine Angabe (MC) darüber enthält, welche Arten digitaler Daten in dem Datensegment (DSi) enthalten sind.

19. Vorrichtung oder Anordnung nach Anspruch 18,
wobei die Prozessoreinheit (P) derart eingerichtet ist, dass die Angabe (MC) über die Art enthaltener Daten eine Länge von 4 Bit aufweist.

20. Vorrichtung nach einem der Ansprüche 15 bis 19,
wobei die Prozessoreinheit (P) derart eingerichtet ist, dass die Längenangabe (MPL) eine Länge von 7 Bit aufweist.

21. Vorrichtung oder Anordnung nach einem der Ansprüche 15 bis 20,
wobei die Prozessoreinheit (P) derart eingerichtet ist, dass die Längenangabe (MPL) und/oder eine Angabe (MC) über die Art in dem Datensegment enthaltener Daten mit Fehlererkennungsinformation (BCH) und/oder Fehlerkorrekturinformation (BCH) gesichert wird.

22. Vorrichtung nach einem der Ansprüche 15 bis 21,
wobei die Synchronisationsinformation (S) 32 Bit und die Korrelationsschwelle 27 Bit aufweist.

23. Vorrichtung oder Anordnung nach einem der Ansprüche 15 bis 22
wobei die Prozessoreinheit (P) derart eingerichtet ist,
dass eine Position der Synchronisationsinformation (S) eines jeweiligen folgenden Datensegments (DSi+1) unter Verwendung der Längenangabe (MPL) des empfangenen Datensegments (DSi) ermittelt wird und die Korrelationsschwelle für die ermittelte Position verringert wird, falls eine Kontrollinformation (Ki) korrekt decodiert wurde, und die jeweilige Synchronisationsinformation (S) korrekt ermittelt wurde.

24. Vorrichtung nach Anspruch 23,
wobei die Korrelationsschwelle auf 23 Bit verringert wird.

25. Vorrichtung oder Anordnung nach Anspruch 23 oder 24,
wobei ein jeweiliges Datensegment (DSi) ferner Nutzdateninformation (NDi) als zu übertragende digitale Daten aufweist, und die Korrelationsschwelle höher als an der ermittelten Position der Synchronisationsinformation (S) des jeweiligen folgenden Datensegments (DSi+1) gewählt wird, um eine Synchronisationsinformation (S) in der Nutzdateninformation (NDi) zu suchen.

26. Vorrichtung oder Anordnung nach Anspruch 25,
wobei zum Finden der Synchronisationsinformation (S) in der Nutzdateninformation (NDi) eine Korrelationsschwelle von 30 Bit gewählt wird.

27. Vorrichtung oder Anordnung nach einem der Ansprüche 15 bis 26,
wobei die Kontrollinformation (Ki) und die Synchronisationsinformation (S) feste Längen haben, und die Prozessoreinheit (P) derart eingerichtet ist, dass, falls die Kontrollinformation (Ki) in dem jeweiligen Datensegment (DSi) nicht korrekt decodiert wird, die Synchronisationsinformation (S) des folgenden Datensegmentes (DSi+1) ermittelt wird, aus der Anzahl von Bits zwischen den ermittelten aufeinanderfolgenden Synchronisationsinformationen (S) die Länge der jeweiligen Nutzdateninformation (NDi) berechnet wird, und die Längenangabe (MPL) des Datensegmentes (DSi) aufgrund der Berechnung korrigiert wird.

## Claims

1. Method of decoding at least one received data segment (DSi) which includes control information (Ki) - which control information comprises a statement of the length (MPL) of the data segment (DSi) - and synchronisation information (S), the data segment (DSi) being decoded in dependence on the length statement (MPL) of the data segment (DSi) and the synchronisation information (S) of the data segment (DSi),
**characterised in that**,
in order to find the start of the data segment (DSi), the synchronisation information (S) is detected using a correlation threshold, and the correlation threshold specifies the number of bits with which a data word must be identical in order to be classified as synchronisation information (S).

2. Method of encoding, transmission and decoding of digital data, comprising the following steps:
a) grouping (S101) digital data into at least one data segment (DSi),
b) encoding (S102) the data segments (DSi), in each case a statement of the length (MPL) of the data segment (DSi) being incorporated in control information (Ki) of the data segment (DSi) in the course of encoding and synchronisation information (S) being assigned to the data segment (DSi) in the course of encoding,
c) transmitting (S103) the data segments (DSi),
d) receiving the data segments (DSi),
e) decoding (S104) the data segments (DSi), in each case a received data segment (DSi) being decoded in dependence on the length statement and the synchronisation information (S) of that data segment (DSi),
**characterised in that**
a correlation threshold is used for detecting the synchronisation information (S) of a particular received data segment (Di) in order to find the start of that data segment (DSi), the correlation threshold specifying the number of bits with which a data word must be identical in order to be classified as synchronisation information (S).

3. Method according to claim 1 or 2,
wherein the control information (Ki) includes at least the synchronisation information (S) in the form of a bit sequence unique within the data segment (DSi).

4. Method according to one of claims 1 to 3,
wherein the control information (Ki) includes a statement (MC) as to what types of digital data are present in the data segment (DSi).

5. Method according to claim 4,
wherein the statement (MC) as to the type of data present has a length of 4 bits.

6. Method according to one of claims 1 to 5,
wherein the length statement (MPL) has a length of 7 bits.

7. Method according to one of claims 1 to 6,
wherein the length statement (MPL) and/or a statement (MC) as to the type of data present in the data segment (DSi) is/are safeguarded using error recognition information and/or error correction information (BCH).

8. Method according to one of claims 1 to 7.
wherein the synchronisation information (S) has 32 bits and the correlation threshold has 27 bits.

9. Method according to one of claims 1 to 8,
wherein, using the length statement (MPL) of the received data segment (DSi), the position of the synchronisation information (S) of a respective following data segment (DSi+1) is detected, and the correlation threshold for the detected position is reduced if the control information (Ki) has been correctly decoded and the respective synchronisation information (S) has been correctly detected.

10. Method according to claim 8 and 9,
wherein the correlation threshold is reduced to 23 bits.

11. Method according to claim 9 or 10,
wherein a particular data segment (DSi) also includes payload data information (NDi) as digital data to be transmitted, and the correlation threshold selected for searching for synchronisation information (S) in the payload data information (NDi) is higher than at the detected position of the synchronisation information (S) of the respective following data segment (DSi+1).

12. Method according to claim 11,
wherein a correlation threshold of 30 bits is selected for finding the synchronisation information (S) in the payload data information (NDi).

13. Method according to one of claims 1 to 12,
wherein the control information (Ki) and the synchronisation information (S) have fixed lengths.

14. Method according to claim 13,
wherein, if the control information (Ki) in the particular data segment (DSi) is not correctly decoded, the synchronisation information (S) of the following data segment (DSi+1) is detected, the length of the respective payload data information (NDi) is calculated from the number of bits between the successive pieces of detected synchronisation information (S), and the length statement (MPL) of the data segment (DSi) is corrected on the basis of the calculation.

15. Apparatus for decoding at least one received data segment (DSi) which includes control information (Ki) - which control information comprises a statement of the length (MPL) of the data segment (DSi) - and synchronisation information (S), having a receiver unit for receiving the data segment (DSi) and a processor unit (P) which decodes the received data segment (DSi) in dependence on the length statement (MPL) of the data segment (DSi) and the synchronisation information (S) of the data segment (DSi),
**characterised in that**,
in order to find the start of the data segment (DSi), the processor unit (P) is so arranged that synchronisation information (S) of the received data segment (DSi) is detected using a correlation threshold, the correlation threshold specifying the number of bits with which a data word must be identical in order to be classified as synchronisation information (S).

16. Arrangement for encoding, transmission and decoding of digital data, comprising:
a) a first apparatus (R1) comprising a first processor unit (P) which is so arranged that the digital data is grouped into at least one data segment (DSi), the data segment (DSi) being encoded, and a statement of the length (MPL) of the data segment (DSi) being incorporated in control information (Ki) of the data segment (DSi) in the course of encoding, and synchronisation information (S) being assigned to the data segment (DSi) in the course of encoding;
b) a means (UM) for transmission of the data segment (DSi), and comprising
c) a second apparatus (R2) comprising a réceiver unit for receiving the data segment (DSi) and also a second processor unit (P) which decodes the received data segment (DSi) in dependence on the length statement (MPL) of the data segment (DSi) and the synchronisation information (S) of the data segment (DSi),
**characterised in that**
the second processor unit (P) is so arranged that synchronisation information (S) of the received data segment (DSi) is detected using a correlation threshold in order to find the start of the data segment (DSi), the correlation threshold specifying the number of bits with which a data word must be identical in order to be classified as synchronisation information (S).

17. Apparatus or arrangement according to one of claims 15 or 16,
wherein the processor unit (P) is so arranged that the control information (Ki) includes at least the synchronisation information (S) in the form of a bit sequence unique within the data segment (DSi).

18. Apparatus or arrangement according to one of claims 15 to 17,
wherein the processor unit (P) is so arranged that the control information (Ki) includes a statement (MC) as to what types of digital data are present in the data segment (DSi).

19. Apparatus or arrangement according to claim 18,
wherein the processor unit (P) is so arranged that the statement (MC) as to the type of data present has a length of 4 bits.

20. Apparatus according to one of claims 15 to 19,
wherein the processor unit (P) is so arranged that the length statement (MPL) has a length of 7 bits.

21. Apparatus or arrangement according to one of claims 15 to 20,
wherein the processor unit (P) is so arranged that the length statement (MPL) and/or a statement (MC) as to the type of data present in the data segment is safeguarded using error recognition information (BCH) and/or error correction information (BCH).

22. Apparatus according to one of claims 15 to 21,
wherein the synchronisation information (S) has 32 bits and the correlation threshold has 27 bits.

23. Apparatus or arrangement according to one of claims 15 to 22,
wherein the processor unit (P) is so arranged that the position of the synchronisation information (S) of a respective following data segment (DSi+1) is detected using the length statement (MPL) of the received data segment (DSi), and the correlation threshold for the detected position is reduced if the control information (Ki) has been correctly decoded and the respective synchronisation information (S) has been correctly detected.

24. Apparatus according to claim 23,
wherein the correlation threshold is reduced to 23 bits.

25. Apparatus or arrangement according to claim 23 or 24,
wherein a particular data segment (DSi) also includes payload data information (NDi) as digital data to be transmitted, and the correlation threshold selected for searching for synchronisation information (S) in the payload data information (NDi) is higher than at the detected position of the synchronisation information (S) of the respective following data segment (DSi+1).

26. Apparatus or arrangement according to claim 25,
wherein a correlation threshold of 30 bits is selected for finding the synchronisation information (S) in the payload data information (NDi).

27. Apparatus or arrangement according to one of claims 15 to 26,
wherein the control information (Ki) and the synchronisation information (S) have fixed lengths and the processor unit (P) is so arranged that, if the control information (Ki) in the particular data segment (DSi) is not correctly decoded, the synchronisation information (S) of the following data segment (DSi+1) is detected, the length of the respective payload data information (NDi) is calculated from the number of bits between the successive pieces of detected synchronisation information (S), and the length statement (MPL) of the data segment (DSi) is corrected on the basis of the calculation.

## Revendications

1. Procédé de décodage d'au moins un segment de données reçu (DSi) contenant une information de contrôle (Ki) avec une indication de longueur (MPL) du segment de données (DSi) et une information de synchronisation (S), dans lequel le segment de données (DSi) est décodé en fonction de l'indication de longueur (MPL) du segment de données (DSi) et de l'information de synchronisation (S) du segment de données (DSi),
**caractérisé en ce que**
l'information de synchronisation (S) est déterminée pour trouver un début du segment de données (DSi) au moyen d'un seuil de corrélation et que le seuil de corrélation indique un nombre de bits auquel un mot contenant des données doit être identique pour être classifié comme information de synchronisation (S).

2. Procédé de codage, transmission et décodage de données numériques comprenant les étapes suivantes :
a) groupage (S101) de données numériques dans au moins un segment de données (DSi),
b) codage (S102) des segments de données (DSi), une indication de longueur (MPL) du segment de données (DSi) étant rentrée lors du codage dans une information de contrôle (Ki) du segment de données (DSi) et étant attribuée au segment de données (DSi) une information de synchronisation (S) lors du codage,
c) transmission (S103) des segments de données (DSi),
d) réception des segments de données (DSi),
e) décodage (S104) des segments de données (DSi), un segment de données respectif reçu (DSi) étant décodé en fonction de l'indication de longueur et de l'information de synchronisation (S) du segment de données (DSi),
**caractérisé en ce que**,
pour déterminer l'information de synchronisation (S) d'un segment de données respectif reçu (Di), on emploie un seuil de corrélation pour trouver un début du segment de données (DSi), le seuil de corrélation indiquant un nombre de bits auquel un mot contenant des données doit être identique pour être classifié comme information de synchronisation (S).

3. Procédé selon la revendication 1 ou 2,
dans lequel l'information de contrôle (Ki) contient au moins l'information de synchronisation (S) sous forme d'un train de bits clair à l'intérieur du segment de données (DSi).

4. Procédé selon l'une quelconque des revendications 1 à 3,
dans lequel l'information de contrôle (Ki) contient une indication (MC) sur les types de données numériques qui sont contenues dans le segment de données (DSi).

5. Procédé selon la revendication 4,
dans lequel l'indication (MC) sur le type de données contenues a une longueur de 4 bits.

6. Procédé selon l'une quelconque des revendications 1 à 5,
dans lequel l'indication de longueur (MPL) a une longueur de 7 bits.

7. Procédé selon l'une quelconque des revendications 1 à 6,
dans lequel l'indication de longueur (MPL) et/ou une indication (MC) sur le type de données contenues dans le segment de données (DSi) est sécurisée par une information de détection d'erreurs et/ou une information de correction d'erreurs (BCH).

8. Procédé selon l'une quelconque des revendications 1 à 7,
dans lequel l'information de synchronisation (S) comporte 32 bits et le seuil de corrélation comporte 27 bits.

9. Procédé selon l'une quelconque des revendications 1 à 8,
dans lequel une position de l'information de synchronisation (S) d'un segment de données respectif suivant (DSi+1) est déterminée en utilisant l'indication de longueur (MPL) du segment de données reçu (DSi) et le seuil de corrélation pour la position déterminée est réduit si une information de contrôle (Ki) a été correctement décodée et si l'information de synchronisation respective (S) a été déterminée correctement.

10. Procédé selon les revendications 8 et 9,
dans lequel le seuil de corrélation est réduit à 23 bits.

11. Procédé selon la revendication 9 ou 10,
dans lequel un segment respectif de données (DSi) comporte en outre une information de données utiles (NDi) sous forme de données numériques à transmettre et le seuil de corrélation est supérieur à la position déterminée de l'information de synchronisation (S) du segment de données suivant (DSi+1) afin de chercher une information de synchronisation (S) dans l'information de données utiles (NDi).

12. Procédé selon la revendication 11,
dans lequel, pour trouver l'information de synchronisation (S) dans l'information de données utiles (NDi), on choisit un seuil de corrélation de 30 bits.

13. Procédé selon l'une quelconque des revendications 1 à 12,
dans lequel l'information de contrôle (Ki) et l'information de synchronisation (S) ont des longueurs fixes.

14. Procédé selon la revendication 13,
dans lequel, si l'information de contrôle (Ki) du segment de données respectif (DSi) n'est pas décodée correctement, l'information de synchronisation (S) du segment de données suivant (DSi+1) est déterminée, on calcule, à partir du nombre de bits entre les informations de synchronisation successives déterminées (S) la longueur de l'information de données utiles (NDi) et l'indication de longueur (MPL) du segment de données (DSi) est corrigée à partir du calcul.

15. Dispositif de décodage d'au moins un segment de données reçu (DSi) contenant une information de contrôle (Ki) avec une indication de longueur (MPL) du segment de données (DSi) et une information de synchronisation (S), comportant une unité réceptrice pour recevoir le segment de données (DSi) et une unité de processeur (P) qui décode le segment de données reçu (DSi) en fonction de l'indication de longueur (MPL) du segment de données (DSi) et de l'information de synchronisation (S) du segment de données (DSi),
**caractérisé en ce que**
l'unité de processeur (P) est aménagée de manière à ce qu'une information de synchronisation (S) du segment de données reçu (Dsi) soit déterminée au moyen d'un seuil de corrélation pour trouver un début du segment de données (DSi), le seuil de corrélation indiquant un nombre de bits auquel un mot contenant des données doit être identique pour être classifié comme information de synchronisation (S).

16. Dispositif de codage, transmission et décodage de données numériques, comportant :
a) un premier dispositif (R1) présentant une première unité de processeur (P) qui est aménagée de manière à ce que les données numériques soient groupées dans au moins un segment de données (DSi), le segment de données (Dsi) étant codé et une indication de longueur (MPL) du segment de données (DSi) étant, lors du codage, rentrée dans l'information de contrôle (Ki) du segment de données (DSi) et une information de synchronisation (S) étant attribuée au segment de données (DSi) ;
b) un moyen (UM) de transmission du segment de données (DSi) et
c) un deuxième dispositif (R2) qui comporte une unité réceptrice pour recevoir le segment de données (DSi) ainsi qu'une deuxième unité de processeur (P) qui décode le segment de données reçu en fonction de l'indication de longueur (MPL) du segment de données (DSi) et de l'information de synchronisation (S) du segment de données (DSi),
**caractérisé en ce que**
la deuxième unité de processeur (P) est aménagée de manière à ce qu'une information de synchronisation (S) du segment de données reçu (DSi) soit déterminée au moyen d'un seuil de corrélation pour trouver un début du segment de données (DSi), le seuil de corrélation indiquant un nombre de bits auquel un mot contenant des données doit être identique pour être classifié comme information de synchronisation (S).

17. Dispositif ou agencement selon l'une quelconque des revendications 15 ou 16,
dans lequel l'unité de processeur (P) est aménagée de manière à ce que l'information de contrôle (Ki) contienne au moins l'information de synchronisation (S) sous forme d'un train de bits clair à l'intérieur du segment de données (DSi).

18. Dispositif ou agencement selon l'une quelconque des revendications 15 à 17,
dans lequel l'unité de processeur (P) est aménagée de manière à ce que l'information de contrôle (Ki) contienne une indication (MC) sur le type de données numériques qui sont contenues dans le segment de données (DSi).

19. Dispositif ou agencement selon la revendication 18,
dans lequel l'unité de processeur (P) est aménagée de manière à ce que l'indication (MC) sur le type de données contenues ait une longueur de 4 bits.

20. Dispositif selon l'une quelconque des revendications 15 à 19,
dans lequel l'unité de processeur (P) est aménagée de manière à ce que l'indication de longueur (MPL) ait une longueur de 7 bits.

21. Dispositif ou agencement selon l'une quelconque des revendications 15 à 20,
dans lequel l'unité de processeur (P) est aménagée de manière à ce que l'indication de longueur (MPL) et/ou une indication (MC) sur le type de données contenues soit sécurisée par une information de détection d'erreurs (BCH) et/ou une information de correction d'erreurs (BCH).

22. Dispositif selon l'une quelconque des revendications 15 à 21,
dans lequel l'information de synchronisation (S) contient 32 bits et le seuil de corrélation contient 27 bits.

23. Dispositif ou agencement selon l'une quelconque des revendications 15 à 22,
dans lequel l'unité de processeur (P) est aménagée de manière à ce qu'une position de l'information de synchronisation (S) d'un segment de données respectif suivant (DSi+1) soit déterminée en utilisant l'indication de longueur (MPL) du segment de données reçu (DSi) et que le seuil de corrélation pour la position déterminée soit réduit si une information de contrôle (Ki) a été décodée correctement et si l'information de synchronisation respective (S) a été déterminée correctement.

24. Dispositif selon la revendication 23,
dans lequel le seuil de corrélation est réduit à 23 bits.

25. Dispositif ou agencement selon la revendication 23 ou 24,
dans lequel un segment de données respectif (DSi) comporte en outre une information de données utiles (NDi) comme données numériques à transmettre et on choisit un seuil de corrélation supérieur à la position déterminée de l'information de synchronisation (S) du segment de données respectif suivant (DSi+1) afin de chercher une information de synchronisation (S) dans l'information de données utiles (NDi).

26. Dispositif ou agencement selon la revendication 25,
dans lequel, pour trouver l'information de synchronisation (S) dans l'information de données utiles (NDi), on choisit un seuil de corrélation de 30 bits.

27. Dispositif ou agencement selon l'une quelconque des revendications 15 à 26,
dans lequel l'information de contrôle (Ki) et l'information de synchronisation (S) ont des longueurs fixes et l'unité de processeur (P) est aménagée de manière à ce que, si l'information de contrôle (Ki) du segment de données respectif (DSi) n'est pas décodée correctement, l'information de synchronisation (S) du segment de données suivant (DSi+1) est déterminée, la longueur de l'information respective de données utiles (S) est calculée à partir du nombre de bits entre les informations de synchronisation successives déterminées (NDi) et l'indication de longueur (MPL) du segment de données (DSi) est corrigée à partir du calcul.
